# EUROPEAN PATENT APPLICATION

(11) **EP 2 755 098 A2**
(43) Date of publication of application: **16.07.2014**
(21) Application number: 13199816.3
(22) Date of filing: 30.12.2013
(51) Int. Cl.: G05B 23/02

(54) **Instrument controlling device and instrument controlling method**

(30) Priority: 09.01.2013 JP 2013001791
(71) Applicant: Azbil Corporation, Chiyoda-ku Tokyo 100-6419 (JP)
(72) Inventor: Ogata, Ryouta, Tokyo, Tokyo 100-6419 (JP); Kagoura, Mamoru, Tokyo, Tokyo 100-6419 (JP)
(74) Representative: Tischner, Oliver

(57) **Abstract**

An instrument controlling device comprising: a storing portion 11 for storing relationally parameter information set for a plurality of instruments selected following user operating instructions from a plurality of instruments that are subject to control, identification information that can identify, as a group, the selected plurality of instruments, and storage date and time information for when the parameter information was stored by the group unit; a list displaying portion 12 for displaying a list of a plurality of instruments that are subject to control; an information extracting portion 13 for extracting, from the parameter information that has been stored by the storing portion, the parameter information for the instruments belonging to the same group as an instrument that is indicated, when there has been an instruction to display history information of the parameter information corresponding to one of the instruments among the plurality of instruments displayed by the list displaying portion; and an information providing portion 14 for providing, in a state that can be viewed by the user, the parameter information that has been extracted by the parameter extracting portion.

## Description

### [Field of Technology]

The present invention relates to an instrument controlling device and an instrument controlling method.

### [Prior Art]

In a work area wherein production processes are controlled, large numbers of instruments (for example, sensor instruments and devices such as valve positioners) are located throughout the plant in order to control the processes. These instruments are sourced from multiple vendors, where each vendor establishes its own parameters that are set in the instruments, and its own values for those parameters. Consequently, when the instruments are deployed in various work areas, the instrument settings must be modified individually to match the system specifications of the individual work area. The system administrator must ascertain and manage parameter information for all of the instruments that are used in the work area, including parameter information that changes in this way. Patent Citation 1, set forth below, discloses a technology that enables rapid access to parameter information set in the individual instruments.

### [Prior Art Citations]

### [Patent Citations]

[Patent Citation 1] Japanese Unexamined Patent Application Publication 2006-146526

### [Summary of the Invention]

### [Problem Solved by the Present Invention]

The technology set forth in Patent Citation 1, above, stores parameter information for each instrument, and reads out, for each instrument, the parameter information that has been stored; however, it does not consider grouped control of parameter information for a plurality of arbitrarily selected instruments.

The present invention is to solve the problem with the conventional technology set forth above, and the object thereof is to provide an instrument controlling device and instrument controlling method that enables grouped control of parameter information for a plurality of arbitrarily selected instruments.

### [Means for Solving the Problem]

An instrument controlling device according to the present invention comprises: a storing portion for storing relationally parameter information set for a plurality of instruments selected following user operating instructions from a plurality of instruments that are subject to control, identification information that can identify, as a group, the selected plurality of instruments, and storage date and time information for when the parameter information was stored by the group unit; a list displaying portion for displaying a list of a plurality of instruments that are subject to control; an information extracting portion for extracting, from the parameter information that has been stored by the storing portion, the parameter information for the instruments belonging to the same group as an instrument that is indicated, when there has been an instruction to display history information of the parameter information corresponding to one of the instruments among the plurality of instruments displayed by the list displaying portion; and an information providing portion for providing, in a state that can be viewed by the user, the parameter information that has been extracted by the parameter extracting portion.

An instrument controlling method according to the present invention includes: a storing step for storing relationally parameter information set for a plurality of instruments selected following user operating instructions from a plurality of instruments that are subject to control, identification information that can identify, as a group, the selected plurality of instruments, and storage date and time information for when the parameter information was stored by the group unit; a list displaying step for displaying a list of a plurality of instruments that are subject to control; an information extracting step for extracting, from the parameter information that has been stored by the storing portion, the parameter information for the instruments belonging to the same group as an instrument that is indicated, when there has been an instruction to display history information of the parameter information corresponding to one of the instruments among the plurality of instruments displayed in the list displaying step; and an information providing step for providing, in a state that can be viewed by the user, the parameter information that has been extracted by the parameter extracting step.

The use of this structure enables the user to define as a single group a plurality of arbitrarily selected instruments, to control, by the group unit, the parameter information for a selected instrument group, and enables parameter information for the entire group to which the instrument belongs to be extracted and this extracted parameter information to be provided to the user as historical information for each instrument belonging to the same group, when the user requests historical information for an instrument.

The information extracting portion may extract, from the parameter information that has been stored by the storing portion, the most up-to-date parameter information from the parameter information for the instruments belonging to the same group as an instrument that is indicated, when there has been an instruction to display the most up-to-date information for the parameter information corresponding to one of the instruments among the plurality of instruments displayed by the list displaying portion.

### [Effects of the Invention]

The present invention enables the provision of an instrument controlling device and an instrument controlling method wherein parameter information for a plurality of arbitrarily selected instruments can be controlled as a group.

### [Brief Descriptions of the Drawings]

FIG. 1 is a diagram illustrating a structure for an instrument controlling system including an instrument controlling device according to a form of embodiment.
FIG. 2 is a diagram illustrating an example of a tool screen used when selecting a plurality of instruments.
FIG. 3 is a diagram illustrating an example of an instrument list screen.
FIG. 4 is a diagram illustrating an example of a history information screen.

### [Embodiments of the Present Invention]

A form of embodiment according to the present invention will be explained below in reference to the drawings. However, the form of embodiment explained below is no more than an illustration, and does not exclude various modifications and applications to technologies not explicated below. That is, the present invention can be embodied in a variety of modified forms, in a scope that does not deviate from the spirit and intent thereof.

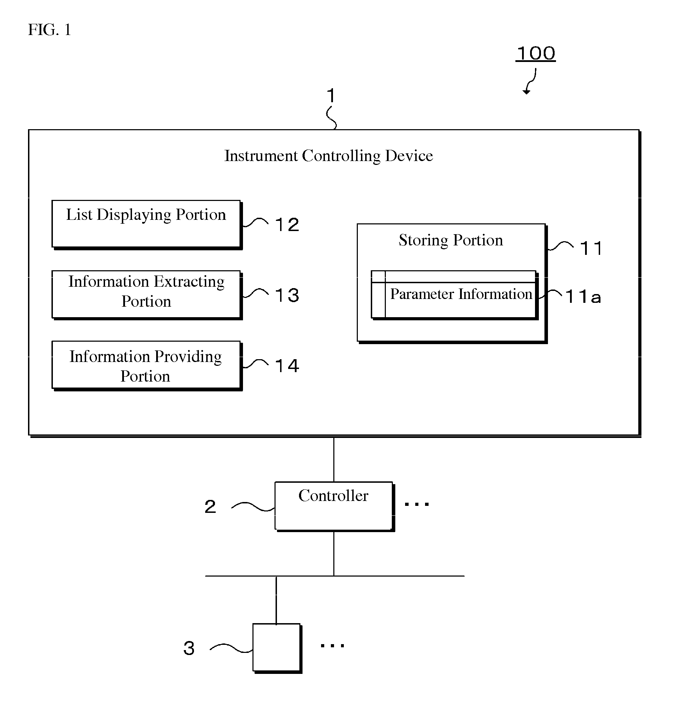

FIG. 1 is a diagram illustrating a schematic structure for an instrument controlling system that includes an instrument controlling device according to a form of embodiment according to the present invention. As illustrated in FIG. 1, the instrument controlling system 100 comprises an instrument controlling device 1, one or more controllers 2, and one or more devices 3. The controller 2 and the device 3 are "instruments" in a hierarchical relationship, where the controller 2 is located on a higher hierarchical level and the device 3 is located hierarchically below the controller 2.

The device 3 is an instrument that is disposed within a plant, where, for example, a fieldbus device that is provided with a function for two-way communication with the controller 2, or a HART communication compatible device that is provided with a HART (Highway Addressable Remote Transducer) communication function, is used for the device 3. A "fieldbus" is a network with a communication protocol enabling two-way communication through digital signals, where the communication specifications have been standardized as the "Foundation Fieldbus" by the Fieldbus Foundation ®.

As illustrative examples of the device 3 there are a variety of sensor instruments for detecting, for example, flow rates, pressures, temperatures, or the like, or any of a variety of actuators for operating a fan, a pump, or a valve positioner for controlling any of a variety of valves such as a flow rate controlling valve, a pressure controlling valve, or the like.

The controller 2 is an instrument for the overall control of the device 3 that is positioned hierarchically thereunder. The controller 2 controls the valve positioner based on, as one example, a measured value for a flow rate or pressure, from the sensor instrument, to adjust the degree of opening, or the like, of a valve that is disposed within a pipe.

The instrument controlling device 1 is a device for controlling instrument information of controllers 2 and devices 3.The instrument controlling device 1 physically comprises, for example, a controlling device such as, for example, a CPU (Central Processing Unit), a storage device such as a memory or an HDD (Hard Disk Drive), an inputting device, and a displaying device. The storage device stores various types of tables for storing information regarding instrument control. A parameter information table 11 a is one example of a type of table.

As illustrated in FIG. 1, the instrument controlling device 1 functionally has, for example, a storing portion 11, a list displaying portion 12, an information extracting portion 13, and an information providing portion 14.

The storing portion 11, following an operating instruction from an administrator who is the user, stores parameter information that is set in a controller 2 or device 3 that is to be controlled, by storing the parameter information in a parameter information table 11 a of the instrument controlling device 1. The parameter information includes, for example, instrument names for identifying the instruments, parameter names for identifying the parameters, parameter values that are set for the parameters, and the like.

When a plurality of instruments for which parameter information is to be stored is selected from the plurality of controllers 2 and devices 3 that are subject to control, the storing portion 11 associates the parameter information that is set in the selected plurality of instruments with group identification information, storage time and date information, and memo information, and stores them in the parameter information table 11 a.

The group identification information is identification information able to identify, as a single group, a plurality of instruments that are selected as being subject to the storage of parameter information. The storage date and time information is information able to identify the date and time at which the parameter information was stored by the group unit. The memo information is information recorded by the administrator, such as what led to the formation of the group.

Note that the information that is stored in association with the parameter information is not limited to the group identification information, the storage date and time information, and the memo information listed above, but rather can be annotated arbitrarily with other information.

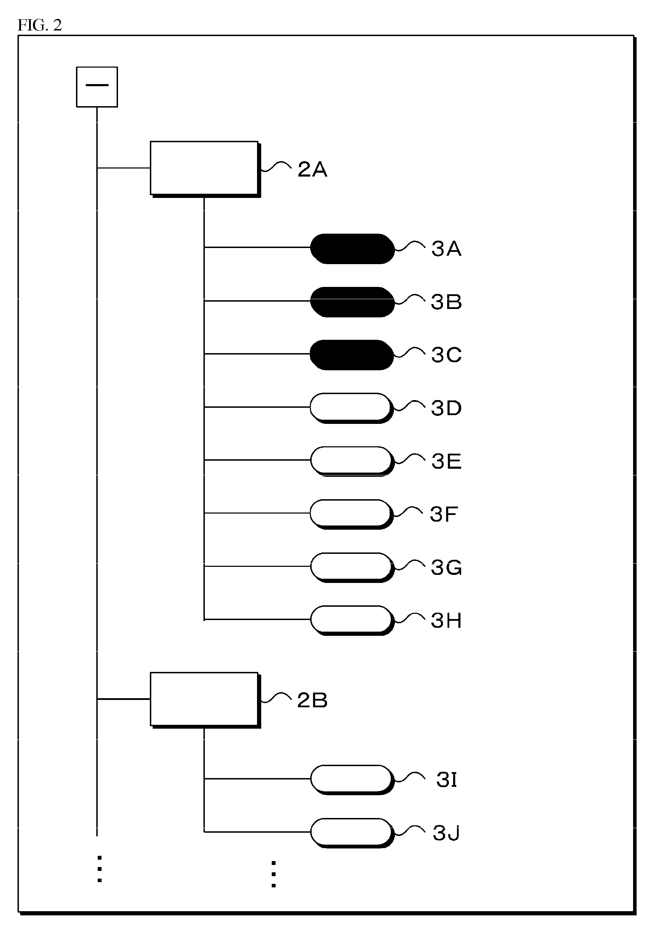

FIG. 2 shows one example of a tool screen that is used when the controller selects a plurality of instruments. This tool screen displays, in a tree format, icons corresponding to a plurality of controllers 2 and devices 3 that are subject to control. In FIG. 2, three devices 3A through 3C are selected from the plurality of devices 3A through 3H that belong to a controller 2A. When, in this state, an OK button (not shown) is clicked, the parameter information corresponding to these three devices 3A through 3C are formed into a single group and stored in the parameter information table 11 a.

That is, the storing portion 11 adds, to the parameter information that is set in the three devices 3A through 3C, identical group identification information, storage date and time information, and memo information, to produce new parameter information where each parameter information that is produced is stored in the parameter information table 11 a period

For the memo information, a memo input field, for example, may be provided in the tool screen, and the memo information may be inputted into this memo input field, or a menu input field may be provided on a sub screen that pops up when an instrument is run after being selected in the tool screen, and the memo information may be inputted into this memo field.

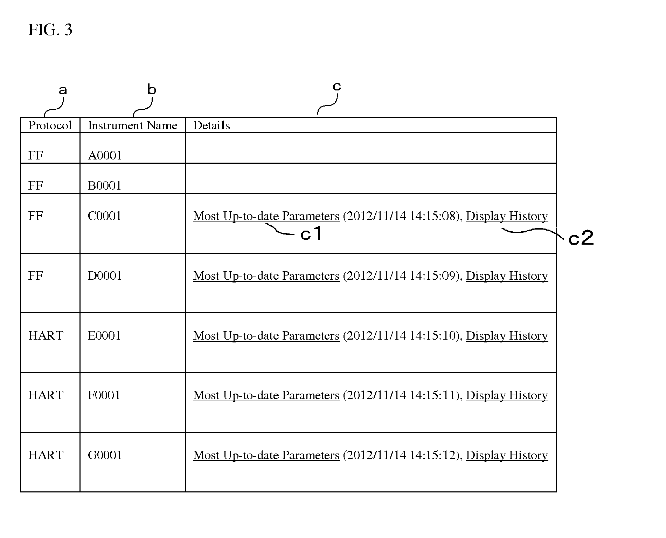

The list displaying portion 12 shown in FIG. 1 displays, on the display device, an instrument list screen that displays a list of the controllers 2 and devices 3 that are subject to control, in response to an operating instruction from the administrator. FIG. 3 shows an example of an instrument list screen. This instrument list screen has, for example, a protocol field a, an instrument name field b, and a detail field c. The protocol field a is an area for displaying the device protocols, and the instrument name field b is an area for displaying the names when identifying the instruments.

The detail field c is an area that shows a hyperlink portion c1 for viewing the most up-to-date parameter information that is set in the instrument, and a hyperlink portion c2 for viewing the history of the parameter information. If the detail field c is blank, this indicates that the parameter information that is set for that instrument has not yet been stored in the parameter information table 11 a.

When one of the hyperlink portions c2 is clicked, in the device lists screen, illustrated in FIG. 3, the information extracting portion 13 that is illustrated in FIG. 1 extracts, from the parameter information table 11 a, parameter information for the instruments that belong to the same group as the instrument corresponding to the hyperlink portion c2. This is explained in detail below.

First, the information extracting portion 13 references the parameter information table 11 a, and identifies the group identification information that is associated with the parameter information of the instrument corresponding to the hyperlink portion c2 that has been clicked. Following this, the information extracting portion 13 extracts, from the parameter information table 11 a, parameter information that is associated with the group identification information that matches the group identification information that has been specified.

On the other hand, when one of the hyperlink portions c1 has been clicked in the instrument list screen that is illustrated in FIG. 3, the information extracting portion 13 extracts, from the parameter information table 11 a, the most up-to-date parameter information from the instrument parameter information corresponding to the hyperlink portion c1. Whether or not the parameter information is the most up-to-date can be evaluated by comparing with the storage date information that is associated with the parameter information.

The information providing portion 14, illustrated in FIG. 1, provides, in a form that can be viewed by the user, the parameter information extracted by the information extracting portion 13. This is explained in detail below.

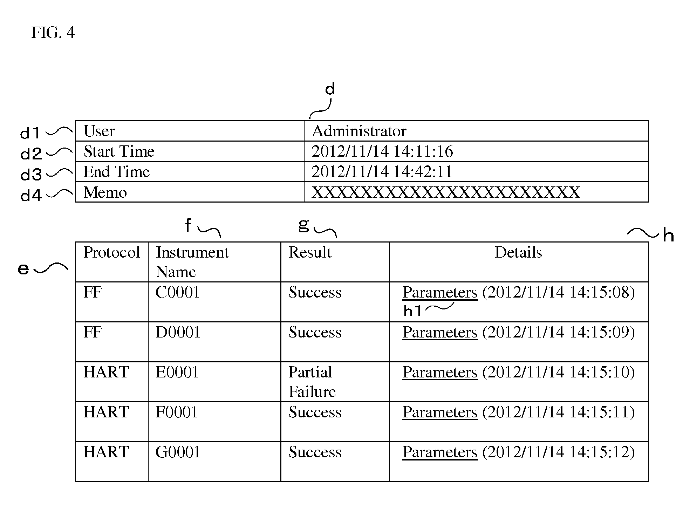

When the hyperlink portion c2, which links to the history display that is displayed in the detail field c of FIG. 3, the information providing portion 14 displays, on the display device, a history information screen for viewing the history of the parameter information that has been set in the instrument corresponding to the hyperlink portion c2 that has been clicked. FIG. 4 shows an example of a history information screen. This history information screen includes, for example, a group information field d, a protocol field e, an instrument name field f, a result field g, and a detail field h. The group information field d further includes a user field d1, a start time field d2, an end time field d3, and a memo field d4.

The user field d1 is an area that displays information for identifying the user that stored the parameter information by the applicable group unit. The start time field d2 and the end time field d3 are areas for displaying the processing start times and the processing end times when the parameter information has been stored by the applicable group unit. The processing start times and/or processing end times are storage date information. The memo field d4 is an area for displaying the memo information that was inputted by the user when the parameter information was stored by the applicable group unit.

The protocol field e is an area for displaying the instrument protocol, and the instrument name field f is an area for displaying the name when identifying an instrument. The result field g is a field for displaying the results of executing the parameter information storing procedure. The detail field h is a field for displaying the hyperlink portion h1 for viewing the parameter information that was set in the instrument at the time of storing. When this hyperlink portion h1 is clicked, a parameter list screen that can list the parameter information set for that instrument is displayed.

On the other hand, when the hyperlink portion c1, which links to the most up-to-date parameter information that is displayed in the detail field c illustrated in FIG. 3, is clicked, the information providing portion 14 displays, in the screen display, a parameter list screen that enables viewing of the most up-to-date parameter information that is set for the instrument corresponding to the hyperlink portion c1 that has been clicked.

As described above, the instrument controlling device 1 in the present embodiment having a storing portion 11 makes it possible to store, in relation to each other in the parameter information table 11 a, parameter information set, for a plurality of instruments selected by the user from a plurality of instruments that are subject to control, group identification information that can identify, as a group, the selected group of instruments, the storage date and time information for when the parameter information was stored by the group unit, and memo information regarding the group.

Moreover, the presence of the list displaying portion 12 makes it possible to display a list of a plurality of instruments that are subject to control. Furthermore, the presence of the information extracting portion 13 makes it possible to extract, from the parameter information table 11 a, parameter information for the instruments belonging to the same group as an instrument that is indicated, when there has been an instruction to display the history information of the parameter information corresponding to one of the instruments from the plurality of instruments displayed in the list. Moreover, the presence of the information providing portion 14 makes it possible to provide, in a state that can be viewed by the user, the parameter information that has been extracted.

Given this, the instrument controlling device 1 in the present embodiment enables control, by the group unit, of parameter information that is set in a plurality of instruments, selected arbitrarily by a user, through defining the group of selected instruments as a single group, thus making it possible to extract parameter information for the entire group to which that instrument belongs when a user has requested history information for an instrument, and making it possible to provide the user with this extracted parameter information and with history information for each of the instruments belonging to the same group.

### [Explanation of Codes]

1: Instrument Controlling Device
2: Controller
3: Device
11: Storing Portion
11 a: Parameter Information Table
12: List Displaying Portion
13: Information Extracting Portion
14: Information Providing Portion

## Claims

1. An instrument controlling device comprising:
a storing portion for storing relationally parameter information set for a plurality of instruments selected following user operating instructions from a plurality of instruments that are subject to control, identification information that can identify, as a group, the selected plurality of instruments, and storage date and time information for when the parameter information was stored by the group unit;
a list displaying portion for displaying a list of a plurality of instruments that are subject to control;
an information extracting portion for extracting, from the parameter information that has been stored by the storing portion, the parameter information for the instruments belonging to the same group as an instrument that is indicated, when there has been an instruction to display history information of the parameter information corresponding to one of the instruments among the plurality of instruments displayed by the list displaying portion; and
an information providing portion for providing, in a state that can be viewed by the user, the parameter information that has been extracted by the parameter extracting portion.

2. An instrument controlling device as set forth in Claim 1, wherein:
the information extracting portion extracts, from the parameter information that has been stored by the storing portion, the most up-to-date parameter information from the parameter information for the instruments belonging to the same group as an instrument that is indicated, when there has been an instruction to display the most up-to-date information for the parameter information corresponding to one of the instruments among the plurality of instruments displayed by the list displaying portion.

3. An instrument controlling method, including:
a storing step for storing relationally parameter information set for a plurality of instruments selected following user operating instructions from a plurality of instruments that are subject to control, identification information that can identify, as a group, the selected plurality of instruments, and storage date and time information for when the parameter information was stored by the group unit;
a list displaying step for displaying a list of a plurality of instruments that are subject to control;
an information extracting step for extracting, from the parameter information that has been stored by the storing portion, the parameter information for the instruments belonging to the same group as an instrument that is indicated, when there has been an instruction to display history information of the parameter information corresponding to one of the instruments among the plurality of instruments displayed in the list displaying step; and
an information providing step for providing, in a state that can be viewed by the user, the parameter information that has been extracted by the parameter extracting step.
